# EUROPÄISCHE PATENTSCHRIFT

(11) **EP 0 481 916 B1**
(45) Veröffentlichungstag und Bekanntmachung des Hinweises auf die Patenterteilung: **25.05.1994**
(21) Anmeldenummer: 91810729.3
(22) Anmeldetag: 13.09.1991
(51) Int. Cl.: F16B 21/08, F16B 21/06, A44C 11/02

(54) **Schloss zum Verbinden zweier Elemente**
A clasp to couple two elements
Fermoir à relier deux éléments

(30) Priorität: 03.10.1990 CH 3183/90; 22.08.1991 CH 2472/91
(43) Veröffentlichungstag der Anmeldung: 22.04.1992
(73) Patentinhaber: Nussberger, Werner, CH-8439 Böbikon (CH)
(72) Erfinder: Nussberger, Werner, CH-8439 Böbikon (CH)
(74) Vertreter: Gachnang, Hans Rudolf

(56) Entgegenhaltungen:
- DE-B- 1 283 025
- FR-A- 2 613 193
- GB-A- 2 084 640
- US-A- 1 347 515
- US-A- 3 611 513
- US-A- 4 694 544

## Beschreibung

Gegenstand der vorliegenden Erfindung ist ein Schloss zum Verbinden zweier Elemente gemäss Oberbegriff des Patentanspruches 1.

Schmuckketten, welche aus einer Mehrzahl von Kettengliedern, z.B. aus Gold, Silber oder anderen Edelmetallen bestehen, oder auch auf einem dünnen Faden oder Seil aufgereihte Perlen werden üblicherweise durch mit den Enden der Kette bzw. des Seiles verbundenen Teilen eines Schlosses zu einem Ring geschlossen. Die meisten der heute bekannten Schmuckschlösser weisen Verriegelungsmechanismen auf, bei denen mit einem Fingernagel ein Sicherungsteil in Gestalt eines Riegels, Schiebers oder eines Bügels aus der Versiegelungsstellung bewegt werden muss. Dies ist sehr umständlich, da das Oeffnen des Schlosses in vielen Fällen"blind"erfolgen muss.

Aus der DE-A-3840170 ist ein Verschluss für Schmuckstücke bekannt, der aus einem Schnäpper und einer zugeordneten Aufnahme besteht. Der Schnäpper ist mit einer ausfedernden Oberfeder drehbeweglich in der Aufnahme angeordnet, wobei eine Ausfederung in einem Aufnahmeraum und über eine Rückhaltewandung mit der Einführöffnung eine Verriegelung erfolgt. Die Wandung des Aufnahmeraumes ist im Bereich der ausfedernden Oberfeder als Führungsbahn zur Einführöffnung ausgebildet und dient zur Aufhebung der Verriegelung durch Verdrehen des Schnäppers und/oder der Aufnahme. Damit die beiden Teile miteinander verrasten, müssen sie gegeneinander verdreht werden. Bei unsorgfältiger Handhabung und mangelnder Kontrolle der Einrastung kann sich der Verschluss wieder öffnen und zum Verlust der Schmuckkette führen.

Hier will die Erfindung Abhilfe schaffen.
Die Erfindung, wie sie im Anspruch 1 gekennzeichnet ist und ausgehend von der DE-A1-38 40 170, löst die Aufgabe, ein Schloss zum Verbinden zweier Elemente zu schaffen, bei dem beide Elemente mühelos zusammengefügt werden und nach dem Zusammenfügen selbsttätig miteinander verrasten.

Das erfindungsgemässe Schloss wird durch Ineinanderstecken der beiden Schlossteile zwangsläufig geschlossen und kann erst durch gegenseitige Verdrehung der beiden Teile und unter Ueberwindung einer Federkraft wieder gelöst werden. Es ist möglich, durch die Verwendung mehrerer am Umfang des Stöpsels in Anlage gelangender Federn die Haltekraft des Schlosses zu vergrössern. Durch am Stöpselteil und am Einsteckteil aufsetzbare Endstücke können die letzten Kettenglieder einer Kette oder die Schlaufen eines Seiles mittels eines Stiftes, welcher den Deckel mit dem Stöpsel bzw. Einsteckteil verbindet, mit letzterem verbunden werden. Das den Einsteckteil umgebende Federhaus kann beliebig ausgebildet sein und dessen Form, insbesondere bei Schmuckketten, an deren Gestalt angepasst sein.

Anhand eines illustrierten Ausführungsbeispieles wird die Erfindung näher erläutert. Es zeigen:
- Figur 1: eine Explosionszeichnung der Einzelteile des Schlosses,
- Figur 2: eine vergrösserte Ansicht des Stöpsels,
- Figur 3: das Schloss in Verbindung mit einer Gliederkette (links) und einer Perlenkette (rechts),
- Figur 4: eine weitere Ausgestaltung des Deckels,
- Figur 5: eine weitere Ausgestaltung des Einsteckteiles,
- Figur 6: eine weitere Ausgestaltung des Einsteckteiles,
- Figur 7/8: je eine Seitenansicht eines elastisch ausgebildeten Stöpsels,
- Figur 9/10: je die Vorderansicht der Stöpsel in Figur 7/8,
- Figur 11: eine Seitenansicht eines Halteteiles,
- Figur 12: ein Grundriss des Halteteiles in Figur 11 und
- Figur 13: eine Explosionszeichnung eines Schlosses gemäss den Figuren 7 und 9.

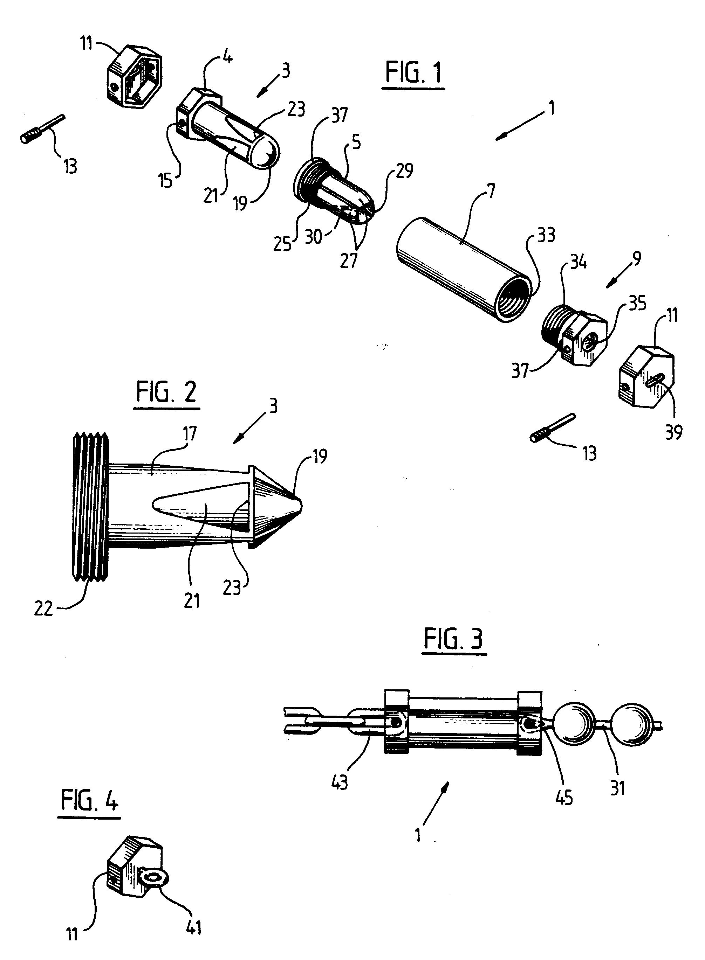

Das in Figur 1 in seine Einzelteile zerlegte Schloss 1 besteht aus einem Stöpselteil 3, einem Federteil 5, einem den Federteil 5 aufnehmenden Federhaus 7 und einem Verbindungsteil 9, der Teil des Federhauses 7 sein kann.Bei Verwendung des Schlosses 1 an Schmuckketten können der Verbindungsteil 9 sowie der Kopf 4 am Stöpselteil 3 durch einen Deckel 11 aus einem Edelmetall abgedeckt sein. Die beiden Deckel 11 werden mit einer Schraube 13 auf dem Verbindungsteil 9 bzw. dem Kopf 4 gesichert gehalten.

Der Stöpselteil 3 besteht aus dem Kopf 4, der beispielsweise sechseckig ausgebildet sein kann und von einer Gewindebohrung 15 durchdrungen ist. An den Kopf 4 schliesst ein zylindrischer Bolzen 17 an. Am Bolzen 17 sind regelmässig über den Umfang verteilt rampenförmige Kerbflächen 21 angebracht, deren der Spitze 19 zugekehrte Flanken oder Stufen 23 im wesentlichen in einer senkrecht oder geneigt zur Bolzenachse verlaufenden Ebene liegen. Zwischen je zwei benachbarten Kerbflächen 21 liegt vorzugsweise noch ein schmaler, von den Kerbflächen 21 nicht berührter Bereich des Mantels des Bolzens 17 und bildet einen stufenlosen Uebergang zur verjüngten Spitze 19. Die Spitze 19 kann kugelförmig ausgebildet sein oder aus mehreren sich schneidenden gebogenen Flächen gebildet werden (vgl. Figur 2). In einer weiteren Ausgestaltung der Erfindung kann zwischen der Mantelfläche des Bolzens 17 und der Spitze 19 im Mantelbereich zwischen den Kerbflächen 21 ein feiner Absatz 22 vorgesehen sein.
Anstelle des Sechseckkopfes 4 ist auch eine Ausführungsform mit einem Gewindekopf möglich (vgl. Figur 2).

Der Federteil 5 weist einen Gewindeabschnitt 25 auf, an dem eine der Anzahl der Kerbflächen 21 entsprechende Zahl Federelemente 27 anschliessen, deren Endkanten 29 ein Vieleck bilden und in einer gemeinsamen Ebene liegen. Die Federelemente 27 können aus einem Stück mit dem Gewindeteil 25 bestehen oder an letzterem nachträglich befestigt worden sein. Der Gewindeabschnitt 25 weist eine axial verlaufende Bohrung auf (nicht sichtbar), deren Durchmesser grösser ist als der Durchmesser des Bolzens 17.

Der Stöpselteil 3 wird mit dem Ende einer Kette, einer Schnur 31 oder auch eine Brosche verbunden, indem ein Stift oder die Schraube 13 durch den Federteil 3 hindurchgeführt wird. Gleichzeitig kann die Schraube 13 auch den Deckel 11 auf dem Federteil 3 festhalten. Zur Verbindung des Federteiles 5 mit dem Verbindungsteil 9 dient das hülsenförmige Federhaus 7, das mittels der beiden Innengewinde 33 auf das Gewinde 25 am Federteil 5 und das Gewinde 34 am Verbindungsteil 9 aufgeschraubt wird. Der Verbindungsteil 9 ist im wesentlichen gleich ausgebildet wie der Kopf 4 des Stöpselteiles 3. Sowohl der Kopf 4 als auch der Verbindungsteil 9 weisen eine stirnseitige Bohrung oder eine kalottenförmige Vertiefung 35 auf, welche durch die eingedrehte Schraube 13, die vorzugsweise vorne einen gewindelosen Abschnitt aufweist, durchquert wird.
Der Kopf 4 und der Kopf des Verbindungsteiles 9 können je durch einen Deckel 11, der vorzugsweise aus einem Edelmetall besteht, abgedeckt werden. Dies ermöglicht es, die einer grösseren mechanischen Beanspruchung ausgesetzten Teile, nämlich den Stöpsel 3, den Federteil 5 sowie den Verbindungsteil 9 und die beiden Schrauben 13 aus einem Material hoher Festigkeit zu erzeugen. Das Federhaus 7 kann entweder ganz aus einem Edelmetall bestehen oder von einer zusätzlichen Edelmetallhülse oder einer beliebig ausgestalteten Verschalung umgeben sein.
Zur Positionierung des Federhauses 7 auf dem Federteil 5 und dem Verbindungsteil 9 können an den beiden letzteren umlaufende Absätze 37 vorgesehen sein. Die Absätze 37 dienen auch dazu, eine allfällig über das Federhaus 7 gesteckte Hülse oder Verschalung aus Edelmetall zu halten.
Die beiden Deckel 11 weisen je eine schlitzförmige Oeffnung 39 auf, wenn die Enden der zu verbindenden Kette oder Schnur 31 schlingen- oder kettengliedförmig ausgebildet sind. Es ist aber auch möglich, anstelle der Oeffnung 39 eine Lasche oder einen Ring 41 auf dem Deckel 11 anzubringen (Figur 4).

Wenn der Kopf 4 des Stöpsels 3 und der Kopf des Verbindungsteiles 9 anstelle eines Sechskantes einen Gewindeabschnitt 22 aufweisen (Figur 2), sind an den beiden Deckeln 11 entsprechende Innengewindeabschnitte angebracht, die ein Aufschrauben der Deckel 11 ermöglichen. Die Schraube 13 mit dem gewindelosen Abschnitt kann zudem als Sicherung gegen unbeabsichtigtes Lösen der Deckel 11 dienen.
Auf der Innenseite der Federelemente 27 kann eine schraubenlinienförmig verlaufende Führungsrille 30 angebracht sein, welche beim Einschieben des Stöpselteiles 3 eine Drehung relativ zum Federteil 5 bewirkt, so dass die Federelemente 27 parallel zu den Kerbflächen 21 zu liegen kommen.

Das erfindungsgemässe Schmuckschloss 1 wird wie folgt mit einer Kette oder einer Schnur 31 verbunden. Das letzte Kettenglied 43 bzw. eine an der Schnur 31 angebrachte Schlaufe 45 werden durch die Oeffnung 39 in die Vertiefung 35 am Kopf 4 bzw. am Verbindungsstück 9 eingeschoben. Durch Eindrehen der Schraube 13, deren gewindeloser Abschnitt durch das Kettenglied 43 bzw. die Schlaufe 45 an der Schnur 31 hindurchgeführt wird, werden die beiden Enden der Kette bzw. der Schnur 31 mit dem Schloss 1 unlösbar verbunden.
Um die offene Kette 31 zu schliessen, z.B. wenn sie um den Hals gelegt worden ist, wird der Stöpselteil 3 in beliebiger gegenseitiger Stellung in den Federteil 5 hineingeschoben und rastet von selbst dort ein, sobald die bei Zusammenführen von der Spitze 19 gespreizten Kanten 29 hinter die Flanken 23 an den Kerbflächen 21 zu liegen kommen. Ein Auseinanderziehen der beiden Schlossteile ist nun nicht mehr möglich.
Zum Lösen bzw. Oeffnen der Kette 31 werden die beiden Teile, d.h. der Stöpselteil 3 und der Verbindungsteil 9 gegeneinander verdreht, bis die Kanten 29 der Federelemente 27 auf die Mantelbereiche zwischen den Kerbflächen 21 auflaufen und dann ungehindert oder bei Vorhandensein von Absätzen 22 unter Ueberwindung eines Widerstandes über die Spitze 19 geschoben werden können.
Sind am Bolzen 17 vier Kerben angebracht, so müssen die beiden Teile des Schlosses um 45° verdreht werden, um das Schloss öffnen zu können. Bei drei Kerben muss eine Drehung um 60° vorgenommen werden, um das gleiche zu erreichen.
Es ist auch möglich, den Durchmesser der Basis der Spitze 19 geringfügig grösser zu machen als den Durchmesser des Bolzens 17, damit auch nach dem Verdrehen der beiden Teile die Federelemente 27 nur unter Ueberwindung eines gewissen Widerstandes über diesen besatz geschoben werden können. Wenn ein solcher besatz vorhanden ist, werden vorzugsweise die inneren Kanten der Federelemente 27 abgerundet, damit sie sich nicht an den vorstehenden Absätzen 22 verhaken können.
Selbstverständlich können anstelle der lappenförmig ausgebildeten Federelemente 27 am Federteil 5 auch federbelastete radial nach innen drückende Nocken oder dergl. eingesetzt werden, welche das Schloss in Schliessstellung zusammenhalten und die bei Drehen der beiden Teile, Stöpselteil 3 und Federteil 5, über die Spitze 19 gleiten können.

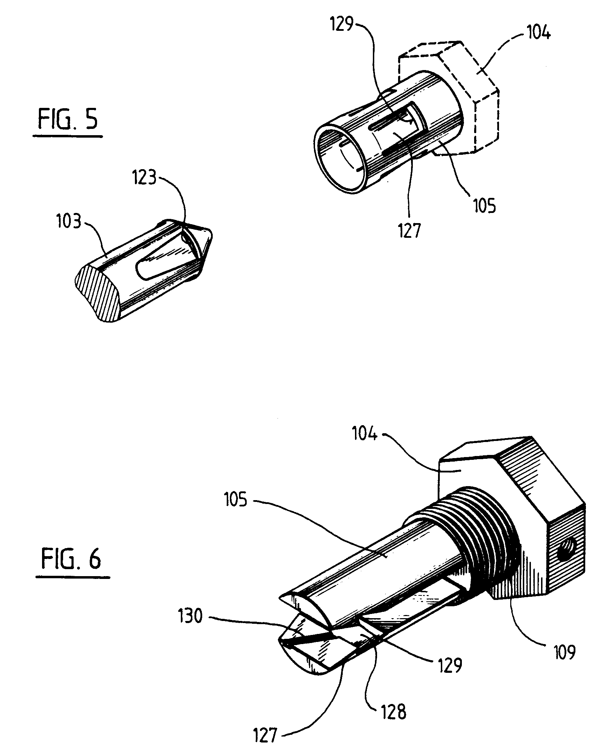

In der Ausführung nach Figur 5 ist der Federteil 125 rohrförmig ausgestaltet und die Federelemente 127 sind Teil der Rohrwandung. Es ist auch möglich, auf das Federhaus 127 zu verzichten und den Kopf 124 des Verbindungsteiles direkt am rohrförmigen Federteil 125 anzuformen (in gebrochenen Linien in Fig. 5 dargestellt).

In der Ausgestaltung der Erfindung nach Figur 6 sind der Federteil 105 und der Verbindungsteil 109 zu einem einzigen Teil vereint. Der Federteil 105 besteht dabei aus den Federelementen 127, die am Verbindungsteil 109 angeformt sind und auf der Innenseite je einen rampenförmigen Einschnitt 128 mit einer Kante 129 aufweisen, an dem sich die Flanke 123 der Kerbfläche 121 am Stöpselteil 103 (gemäss Fig. 5) verhaken kann. Die Federwirkung wird durch eine axiale Spaltung des Einsteckteiles 105 in zwei oder mehr Abschnitte erreicht.

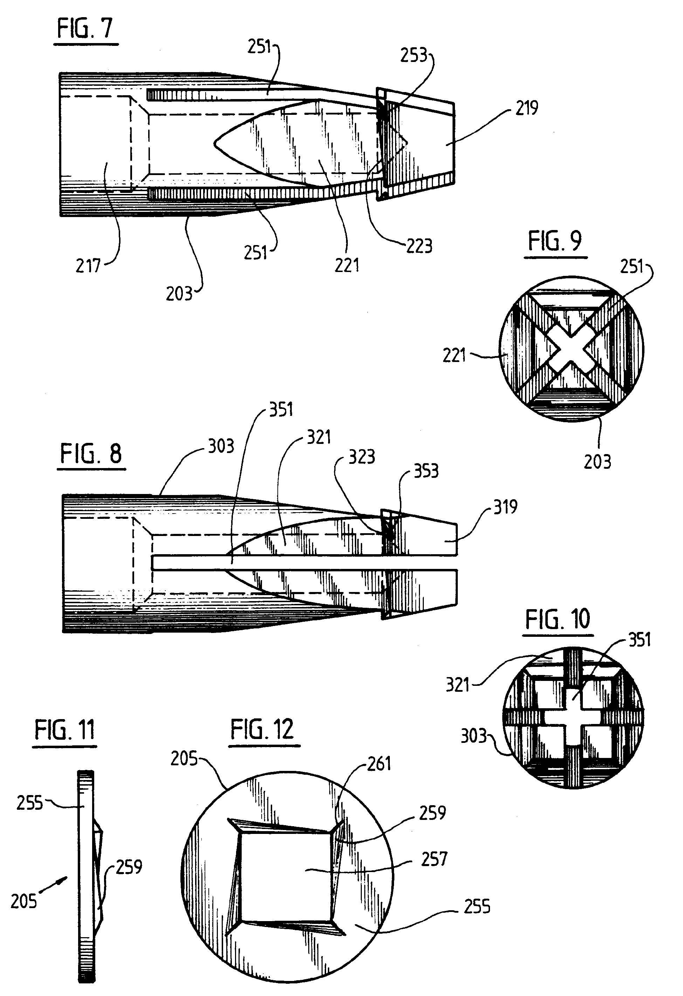

In der Ausgestaltung der Erfindung nach den Figuren 7 bis 13 ist der Stöpselteil 203 durch kreuzweise angebrachte Schlitze 251 im Bereich von dessen Spitze 219 elastisch zusammendrückbar ausgebildet. Analog zu den beiden vorgenannten Ausführungsbeispielen sind wiederum am Umfang des Bolzens 217 die Kerbflächen 221 angebracht. Die Flanken 223 liegen je in einer zur Längsachse des Bolzens 217 geneigten Ebene. Spitzenseitig der Flanken 223 sind in der Spitze 219 am Umfang V-förmig verlaufende, einen Gewindeabschnitt bildende Kerben 253 eingelassen.

Als Feder- oder Widerstandsteil 205 dient eine Scheibe 255 mit einer vieleckigen Ausnehmung 257, deren Eckenzahl der Anzahl der Kerbflächen 221 oder einer Mehrzahl davon entspricht. Die Kanten 259 der Ausnehmung 257 sind mindestens an einer der beiden Kontaktstellen mit der benachbarten Kante aus der Ebene der Scheibe 255 rampenförmig hochgebogen. Zu diesem Zweck sind an den gegenseitigen Berührungsstellen der Kanten 259 radial verlaufende Schlitze 261 in der Scheibe 255 eingelassen. Der Querschnitt der Ausnehmung 257 ist gleich oder geringfügig kleiner, jedoch kongruent mit dem Querschnitt durch den Bolzen 217 im Bereich der Flanken 223.

In der Ausgestaltung der Erfindung nach den Figuren 8 und 10 sind am Stöpselteil 303 stehen die Schlitze 351 senkrecht zu den Kerbflächen 321. Die übrige Ausbildung, insbesondere diejenige der Flanken 323 und der Kerben 353 der Spitze 319 entspricht derjenigen in den Figuren 7 und 9. Die letzten beiden Ziffern der Bezugszeichen weisen auf entsprechende Teile in den vorgenannten Figuren hin.
Im folgenden wird die Funktionsweise des Schlosses gemäss den Figuren 7 bis 13 näher erläutert. Zum Verbinden der Enden einer Kette, welche einerseits mit dem Stöpselteil 203,303 und andererseits mit dem Feder- oder Widerstandsteil 205 verbunden sind, wird der Stöpselteil 203,303 in den Feder- oder Widerstandsteil 205 eingeschoben. Die gegenseitige Winkellage der Kerbflächen 221,321 und der Seitenflächen 259 spielt dabei keine Rolle, weil die Spitze 219,319 beim Einschieben zusammengedrückt wird und in jeder Winkellage durch die Oeffnung 257 hindurchtreten kann. Sobald die Flanken 223,323 die Oeffnung 257 passiert haben, wird die Spitze 219,319 infolge der federnden Ausbildung des Bolzens 217,317 gespreizt, und der Stöpselteil 203,303 dreht sich von selbst, bis die Kerbflächen 221,321 parallel zu den Seitenflächen 259 des Einsteckteiles 205 liegen.
Zum Lösen bzw. Oeffnen des Schlosses müssen die beiden Elemente, der Stöpselteil 203,303 und der Feder- oder Widerstandsteil 205 gegeneinander verdreht werden, bis sich die Kerbe 253,353 entlang der Kante 259 am Feder- oder Widerstandsteil 255 emporschraubt und dabei die Spitze 219,319 so weit zusammendrückt, bis sie durch die Oeffnung 257 hindurchtreten kann. Es ist dabei zu beachten, dass das Oeffnen nur in einer Drehrichtung erfolgen kann und zudem gegen den Widerstand der durch die Drehung federnd nach innen gepressten Abschnitte des Bolzens 217,317 erfolgen muss.

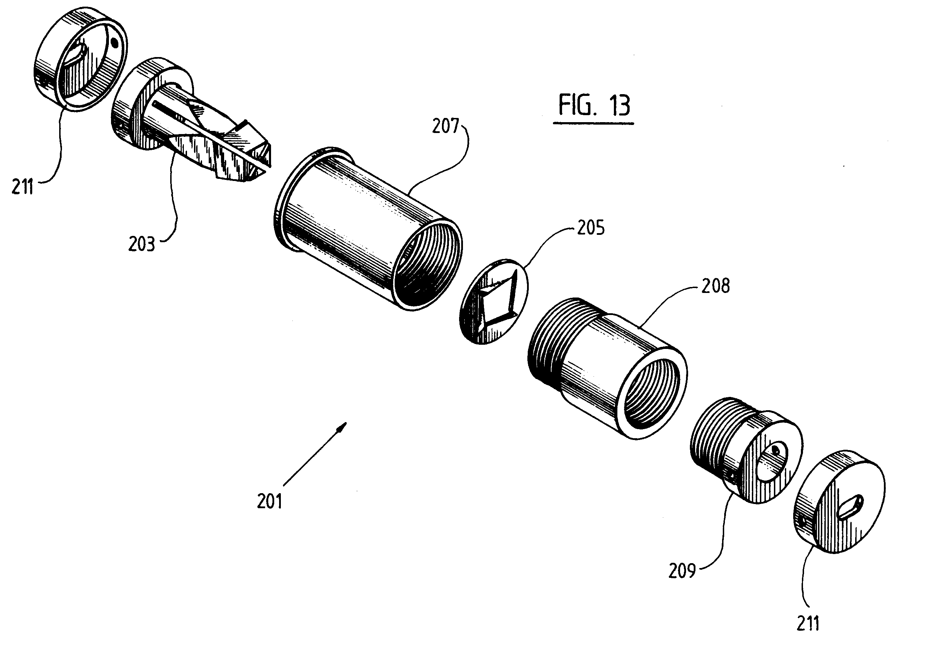

In der Explosionszeichnung gemäss Figur 13 ist eine Ausführung eines Schlosses 201 mit einem Stöpselteil 203 und einem Feder- oder Widerstandsteil 205 dargestellt. Die Befestigung des Stöpselteiles 203 mit dem Kettenende erfolgt in analoger Weise wie in Figur 3 dargestellt. Das Feder- oder Widerstandsteil 205 wird im Federhaus 207 durch ein Zwischenstück 208 geklemmt gehalten. Selbstverständlich könnte das Feder- oder Widerstandsteil 205 in das Federhaus 207 eingepresst, eingeklebt oder anderswie mit dem letzteren verbunden sein.

Das für die Verbindung von Schmuckkettenenden beschriebene Schloss kann, entsprechend grösser und widerstandsfähiger ausgeführt, auch für die Verbindung bei anderen Anwendungen eingesetzt und für die Aufnahme hoher Zugkräfte ausgelegt werden.

Selbstverständlich kann das erfindungsgemässe Schloss auch als Kupplung oder als Verbindungselement zum lösbaren Verbinden eines fest angeordneten Teiles mit einem losen Teil, z.B. einer Sicherungskette an einer Haustüre, eingesetzt werden.

## Patentansprüche

1. Schloss zum Verbinden zweier Elemente mit einem Feder- oder Widerstandsteil und einem in den Feder- oder Widerstandsteil einschiebbaren Stöpselteil, wobei die beiden Teile unter Wirkung eines federelastischen Abschnittes miteinander verrasten und durch gegenseitige Verdrehung entrastbar sind, dadurch gekennzeichnet, dass der Stöpselteil (3,103,203,303) einen Bolzen (17,117,217) und eine den Bolzen (17,11,217) abschliessende Spitze (19,119,219) aufweist, und dass am Bolzen (17,117,217) mindestens eine zur Längsachse geneigte Kerbfläche (21,121,221,321) ausgebildet ist, die an der Basis der Spitze (19,119,219,319) unter Bildung einer Stufe (23,123,223,323) endet.

2. Schloss nach Anspruch 1, dadurch gekennzeichnet, dass das Feder- oder Widerstandsteil (5,105) rohrförmig ausgebildet ist und mindestens ein in den Rohrquerschnitt hineinragendes Federelement (27,127) aufweist, dessen Vorderkante (29,129) bei eingeschobenem Stöpselteil (3,103) an der Stufe (23,123) anzuliegen bestimmt ist.

3. Schloss nach Anspruch 2, dadurch gekennzeichnet, dass das Federelement (27,127) blattfederartig aus dem rohrförmigen Feder- oder Widerstandsteil (5,105) ausgeschnitten ist, oder dass der rohrförmige Feder- oder Widerstandsteil (5,105) aufgeschlitzt und mit einem rampenförmigen Einstich (128) versehen ist.

4. Schloss nach Anspruch 1, dadurch gekennzeichnet, dass die Spitze (219,319) des Stöpselteiles (203,303) durch mindestens einen axial verlaufenden Einschnitt (251,351) radial federelastisch ausgebildet ist.

5. Schloss nach Anspruch 1 oder 4, dadurch gekennzeichnet, dass die Stufe (123,223) in einer zur Achse des Stöpselteiles (203,303) lotrechten oder geneigten Ebene liegt.

6. Schloss nach einem der Ansprüche 1,4 oder 5, dadurch gekennzeichnet, dass im Bereich der Basis der Spitze (219,319) eine V-förmige Kerbe (253,353) angebracht ist, deren Scheitel in der Kerbfläche (221,321) oder im Mantelabschnitt zwischen den Kerbflächen (221,321) liegt und als Gewindeabschnitt ausgebildet ist.

7. Schloss nach einem der Ansprüche 4 bis 6, dadurch gekennzeichnet, dass der Feder- oder Widerstandsteil (203,303) eine Ausnehmung (257) aufweist, deren Querschnitt ähnlich und kleiner oder gleich dem Querschnitt des Bolzens (217,317) im Bereich der Stufe (223,323) ist.

8. Schloss nach Anspruch 7, dadurch gekennzeichnet, dass die Kanten (259) an der Ausnehmung (257) geneigt sind zur Ebene der Ausnehmung (257).

9. Schloss nach einem der Ansprüche 1 bis 8, dadurch gekennzeichnet, dass am Stöpselteil (3,103,203,303) und am Feder- oder Widerstandsteil (5,105,205,305) ein Kopf (4) ausgebildet ist, welcher stirnseitig eine Vertiefung (35) aufweist und radial von einer Bohrung (13) durchdrungen ist, welche beidseitig in die Vertiefung (35) mündet und zum Einführen einer Schraube oder eines Stiftes (13) bestimmt ist.

10. Schloss nach Anspruch 9, dadurch gekennzeichnet, dass auf die Köpfe (4) Deckel (11) aufsteck- oder aufdrehbar befestigt sind, deren Böden eine Oeffnung (39) oder einen Ring (41) aufweisen.

## Claims

1. Clasp for joining two elements, including a resilient or resistant part and a plug-in part, which is insertable into the resilient or resistant part, the two parts locking together by the action of a resilient region and being unlockable by mutual twisting, characterised in that the plug-in part (3, 103, 203, 303) includes a pin (17, 217) and a pointed tip (19, 219), which terminates the pin (17, 217), and in that at least one notched face (21, 221, 321) is provided on the pin (17, 217), which notched face is inclined relative to the longitudinal axis and terminates at the base of the pointed tip (19, 219, 319) so as to form a step (23, 123, 223, 323).

2. Clasp according to claim 1, characterised in that the resilient or resistant part (5, 105) has a tubular configuration and includes at least one resilient member (27, 127), which protrudes into the tubular cross-section and the front edge (29, 129) of which is intended to abut against the step (23, 123) when the plug-in part (3, 103) is inserted.

3. Clasp according to claim 2, characterised in that the resilient member (27, 127) is cut from the tubular resilient or resistant part (5, 105) in the manner of a leaf spring, or in that the tubular resilient or resistant part (5, 105) is slotted and provided with a ramp-like slot (128).

4. Clasp according to claim 1, characterised in that the pointed tip (219, 319) of the plug-in part (203, 303) is radially resilient due to at least one axially extending slot (251, 351).

5. Clasp according to claim 1 or 4, characterised in that the step (123, 223) lies in a plane extending vertically or inclinedly relative to the axis of the plug-in part (203, 303).

6. Clasp according to one of claims 1, 4 or 5, characterised in that a V-shaped notch (253, 353) is provided in the region of the base of the pointed tip (219, 319), the junction of said notch lying in the notched face (221, 321) or in the surface region between the notched faces (221, 321) and being formed as a threaded region.

7. Clasp according to one of claims 4 to 6, characterised in that the resilient or resistant part (203, 303) has a recess (257), the cross-section of which is similar to and smaller than or identical to the cross-section of the pin (217, 317) in the region of the step (223, 323).

8. Clasp according to claim 7, characterised in that the edges (259) of the recess (257) are inclined relative to the plane of the recess (257).

9. Clasp according to one of claims 1 to 8, characterised in that a head (4) is provided on the plug-in part (3, 103, 203, 303) and on the resilient or resistant part (5, 105, 205, 305), said head having an indentation (35) in its end face and having a bore (15) extending radially therethrough, which bore extends into the recess (35) at each end and is intended for the introduction of a screw or a pin (13).

10. Clasp according to claim 9, characterised in that covers (11) are attachably or rotatably mounted on the heads (4), the bases of said covers having an aperture (39) or a ring (41).

## Revendications

1. Attache pour la liaison de deux éléments avec une partie à ressort ou partie résistante et une partie fiche, pouvant s'insérer dans la partie à ressort ou partie résistante, où les deux parties s'enclenchent l'une dans l'autre sous l'action d'une section à action de ressort élastique et peuvent être désaccouplés par un mouvement de rotation réciproque, caractérisée en ce que la partie fiche (3, 103, 203, 303) présente une broche (17, 217) et une pointe (19, 219) terminant la broche (17, 217), et en ce qu'au moins une surface en coin (21, 221, 321), inclinée par rapport à l'axe longitudinal est formée sur la broche (17, 217), et se termine à la base de la pointe (19, 219, 319) par la formation d'un redan (23, 123, 223, 323).

2. Attache selon la revendication 1, caractérisée en ce que la partie à ressort ou partie résistante (5, 105) est de forme tubulaire et comprend au moins un élément ressort (27, 127) qui pénètre en dépassant dans la section tubulaire, et dont le bord avant (29, 129) est prévu pour venir contre le redan (23, 123) quand la partie fiche (3, 103) est enfoncée.

3. Attache selon la revendication 2, caractérisée en ce que la partie ressort (27, 127) est découpé en forme de lame de ressort dans la partie à ressort ou résistante (5, 105) de forme tubulaire ou en ce que la partie à ressort ou partie résistante (5, 105) est fendue et comporte une saignée (128) en forme de rampe.

4. Attache selon la revendication 1, caractérisée en ce que la pointe (219, 319) de la partie fiche (203, 303) est formée par au moins une découpe (251, 351) s'étendant axialement et faisant ressort dans le sens radial.

5. Attache selon la revendication 1 ou 4, caractérisée en ce que le redan (123, 223) se trouve sur un plan perpendiculaire ou incliné par rapport à l'axe de la partie fiche (203, 303).

6. Attache selon l'une des revendications 1, 4 ou 5, caractérisée en ce qu'un coin (253, 353) en forme de V est disposé dans la zone de la base de la pointe (219, 319) et dont le sommet se trouve sur la surface en coin (221, 321) ou dans la zone du manteau entre les surfaces en coin (221, 321) et qui est formé en section de filetage.

7. Attache selon l'une des revendications 4 à 6, caractérisée en ce que la partie à ressort ou partie résistante (203, 303) présente un évidement (257) dont la section est semblable et plus petite ou égale à la section de la broche (217, 317) dans la zone du redan (223, 323).

8. Attache selon la revendication 7, caractérisée en ce que les arêtes (259) à l'évidement (257) sont inclinées par rapport au plan de l'évidement (257).

9. Attache selon l'une des revendications 1 à 8, caractérisée en ce qu'une tête (4) est formée à la partie fiche (3, 103, 203, 303) et à la partie à ressort ou partie résistante (5, 105, 205, 305), celle-ci présentant une cavité (35) frontale et étant traversée radialement par un perçage (15), qui débouche des deux côtés dans la cavité (35) et qui est prévu pour l'introduction d'une vis ou d'une goupille (13).

10. Attache selon la revendication 9, caractérisée en ce que des chapeaux (11) peuvent être montés par enfichage ou par vissage sur la tête (4) et dont le fond présente une ouverture (39) ou un anneau (41).
